# EUROPÄISCHE PATENTSCHRIFT

(11) **EP 1 428 848 B1**
(45) Veröffentlichungstag und Bekanntmachung des Hinweises auf die Patenterteilung: **07.06.2006**
(21) Anmeldenummer: 03025579.8
(22) Anmeldetag: 08.11.2003
(51) Int. Cl.: C08G 18/48, C08G 18/79, C08G 18/66, F16L 59/14

(54) **Polyisocyanuratschaum enthaltende Verbundelemente, insbesondere gedämmte Rohre**
Polyisocyanurate foam containing composite elements, in particular insulated pipes
Elements composites comprenant mousse de polyisocyanurate, en particulier tuyaux isolés

(30) Priorität: 09.12.2002 DE 10257633
(43) Veröffentlichungstag der Anmeldung: 16.06.2004
(73) Patentinhaber: BASF Aktiengesellschaft, 67056 Ludwigshafen (DE)
(72) Erfinder: Grieser-Schmitz, Christof, 49076 Osnabrück (DE); Vetter, Stefanie, 49356 Diepholz (DE)

(56) Entgegenhaltungen:
- WO-A-00/39497
- WO-A-01/18087
- WO-A-02/28936
- WO-A-99/20672
- US-A- 4 452 829
- US-A- 4 880 848

## Beschreibung

Die Erfindung betrifft Verbundelemente, die bevorzugt eine innere Schicht (x), beispielsweise ein Mediumrohr (ii), eine äußere Schicht (xx), beispielsweise ein Mantelrohr (iii), und zwischen den Schichten (x) und (xx) einen Schaum (i) aufweisen, bevorzugt gedämmte Rohre, Sandwichelemente, thermische Isolationselemente für Kühl- und Wärmeaggregate und/oder thermisch isolierte Container, enthaltend einen Schaum (i) auf der Basis von Polyisocyanat-Polyadditionsprodukten, der Isocyanuratstrukturen aufweist und basiert auf der Umsetzung von (a) Isocyanaten mit (b) gegenüber Isocyanaten reaktiven Verbindungen. Außerdem bezieht sich die Erfindung auf Verfahren zur Herstellung dieser erfindungsgemäßen Verbundelemente, insbesondere der gedämmten, d.h. isolierten Rohre.

Die Herstellung von gedämmten, d.h. isolierten Rohren oder anderen Verbundelementen, die zur thermischen Isolierung von heißen oder kalten Stoffen dienen, beispielsweise Sandwichelementen ist allgemein bekannt. Als Isoliermaterial wird aufgrund der hervorragenden thermischen Isolationseigenschaften häufig Polyurethanhartschaumstoff eingesetzt, der gegebenenfalls Isocyanuratstrukturen aufweisen kann. So lehrt WO 00/39497 gedämmte Rohre, die als Isoliermaterial Polyurethan-Polyisocyanurat-Hartschaumstoffe enthalten.

Die Aufgabe, die der vorliegenden Erfindung zugrunde lag, bestand darin, Verbundelemente, insbesondere gedämmte Rohre, Sandwichelemente, thermische Isolationselemente für Kühl- und Wärmeaggregate und/oder thermisch isolierte Container, enthaltend einen Schaum (i) auf der Basis von Polyisocyanat-Polyadditionsprodukten, der Isocyanuratstrukturen aufweist und basiert auf der Umsetzung von (a) Isocyanaten mit (b) gegenüber Isocyanaten reaktiven Verbindungen zu entwickeln, die einen einfacheren, besseren und/oder preisgünstigeren Flammschutz aufweisen. Außerdem sollten insbesondere die gedämmten Rohre über eine verbesserte Handhabung und eine vereinfachte Herstellung bei schnellerer Verlegung verfügen.

Diese Aufgabe wurde dadurch gelöst, dass man als (b) mindestens eine Verbindung mit einer Hydroxylzahl von kleiner oder gleich 120 mg KOH/g, bevorzugt kleiner 100 mg KOH/g, besonders bevorzugt zwischen 10 mg KOH/g bis 100 mg KOH/g, insbesondere 20 mg KOH/g bis 80 mg KOH/g einsetzt.

Dieser erfindungsgemäße Einsatz von Weichschaumpolyolen führt zu flexibleren Eigenschaften im Schaum, der zur Ummantelung von "endlosen" Verbundmantelrohren geeignet ist, die in Längen größer 50 m auf große Trommeln aufgewickelt werden können. Bekannte gedämmte Rohre auf der Basis von Polyurethan oder Polyurethan/Polyisocyanurathartschaumstoffen wären hierfür zu steif. Diese Möglichkeit der Vorformung bietet exzellente Vorteile sowohl bei der Herstellung (durch das "Aufwickeln" des gedämmten Rohres ist ein regelmäßiges Abschneiden überflüssig) als auch beim Verlegen, da ein aufwendiges Zusammenfügen einzelner Rohre vermieden wird. Gegenstand der Erfindung sind deshalb auch gedämmte, d.h. thermisch isolierte Rohre enthaltend mindestens ein Mediumrohr (ii), mindestens einen, bevorzugt einen Schaum (i) und mindestens ein Mantelrohr (iii), wobei der Schaum (i) Isocyanuratstrukturen enthält. In diesen gedämmten Rohren wird das Mediumrohr (ii) üblicherweise von dem Schaum (i) umgeben, der wiederum von dem Mantelrohr (iii) umhüllt wird.

Der erfindungsgemäße Schaum (i) weist Isocyanurat- und/oder Polyisocyanuratstrukturen auf. Im Vergleich mit bekannten geschlossenzelligen, semiflexiblen Hartschaumstoffen auf der Basis von Polyurethanen konnte in der vorliegenden Erfindung das gerade bei gedämmten Rohre schwierig zu lösende Problem des Flammschutzes hervorragend gelöst werden. Zur Erreichung der Brandschutznorm B2 nach DIN 4102, Teil 1 bei pentan- bzw. wasser-(CO₂) -getriebenen semiflexiblen Schäumen sind sehr große Mengen an Flammschutzmittel erforderlich (bis zu 60%, bezogen auf das Gewicht der gegenüber Isocyanat reaktiven Polyol- und Zusatzstoffmischung). Dies führt zu sehr hohen Rohstoffeinstandspreisen für entsprechende PUR-Systeme. Weiterhin besteht kaum die Möglichkeit, halogenfreie Schäume wirtschaftlich herzustellen, da die Auswahl an halogenfreien Flammschutzmitteln (FSM) sehr begrenzt ist. Entweder handelt es sich um additive FSM, die nur in begrenzter Menge eingesetzt werden können oder um einbaubare FSM, die sehr teuer sind. Überraschend konnte nun festgestellt werden, dass durch den Einsatz von Isocyanurat- oder Polyisocyanuratstrukturen in wasser-, n-Pentan-, cyclopentan- und/oder 2-Methylbutan-getriebenen semiflexiblen Schaumstoffen in Verbundelementen für die thermische Isolierung, insbesondere gedämmter Rohre, der Gehalt an Flammschutzmitteln derart drastisch vermindert werden kann, dass auch der Einsatz von halogenfreien Flammschutzmitteln wirtschaftlich möglich wird. Polyurethanweichschaumstoffe, die Isocyanuratstrukturen aufweisen, sind allgemein bekannt und beispielsweise in der DE-A 101 055 57 beschrieben. Doch ihr Einsatz in Kombination mit Polyurethanhartschaumstoffen gerade in Verbundelementen, insbesondere in gedämmten Rohren, wurde dem Fachmann nicht nahegelegt, da semiflexible Schäume als ungeeignet galten.

Die erfindungsgemäßen Schaumstoffe sind bevorzugt geschlossenzellig. Besonders bevorzugt liegt die Geschlossenzelligkeit über 88 %. Bevorzugt handelt es sich bei den erfindungsgemäßen Verbundelementen um gedämmte Rohre, die mindestens ein Mediumrohr (ii) enthalten, das von dem Schaum (i) umgeben ist, der gegebenenfalls von einem Mantelrohr (iii) umschlossen wird.

Als erfindungsgemäße gegenüber Isocyanaten reaktive Verbindung (b) kommen Verbindungen mit mindestens zwei reaktiven Wasserstoffatomen in Frage. Hierfür kommen Verbindungen in Frage, die zwei oder mehr reaktive Gruppen, wie OH-Gruppen, SH-Gruppen, NH-Gruppen, NH₂-Gruppen und CH-aciden Gruppen im Molekül tragen, beispielsweise Polyetherpolyalkohole und/oder Polyesterpolyalkohole, im Folgenden auch als Polyole bezeichnet. Diese erfindungsgemäßen Polyole weisen bevorzugt eine Funktionalität gegenüber Isocyanaten von 2 bis 8, vorzugsweise 2, 3 oder 4 auf. Besonders bevorzugt als (b) sind Polyether- und/oder Polyesteralkohole mit 2, 3 und/oder 4 Hydroxylgruppen. Die erfindungsgemäß einzusetzende Verbindung (b) mit einer Hydroxylzahl von kleiner oder gleich 120 mg KOH/g kann gegebenenfalls zusammen mit anderen allgemein bekannten gegenüber Isocyanaten reaktiven Verbindungen (b) eingesetzt werden, wobei bevorzugt alle gegenüber Isocyanaten reaktive Verbindungen (b) die eingangs dargestellten erfindungsgemäßen bzw. bevorzugten Hydroxylzahlen aufweisen. Besonders bevorzugt weist deshalb die Mischung aller gegenüber Isocyanaten reaktiven Verbindungen (b), insbesondere die bevorzugten Polyether- und/oder Polyesteralkohole, bevorzugt solche mit 2, 3 und/oder 4 Hydroxylgruppen und einem Molekulargewicht zwischen 500 g/mol und 10000 g/mol, eine Hydroxylzahl kleiner 200 mg KOH/g, bevorzugt zwischen 10 mg KOH/g und 200 mg KOH/g, besonders bevorzugt zwischen 10 mg KOH/g und 120 mg KOH/g, insbesondere zwischen 10 mg KOH/g und 100 mg KOH/g auf. Diese Hydroxylzahl der Mischung ist die mittlere Hydroxylzahl der Mischung enthaltend alle Komponenten (b).

Zu den erfindungsgemäßen Polyolen ist Folgendes auszuführen: Entsprechende Polyetheralkohole können auf der Basis von Ethylenoxid und gegebenenfalls Propylenoxid und/oder Butylenoxid bevorzugt mit einem Ethylenoxidanteil von mehr als 30 Gew.-%, besondere bevorzugt größer als 60 Gew.-%, jeweils bezogen auf die eingesetzte Gesamtmenge an Alkylenoxid, hergestellt werden, wobei das Polyetheralkohol bevorzugt einen Anteil an primären OH-Gruppen größer als 30 %, vorzugsweise 40 bis 90 %, aufweist. Beispielsweise kommen als Polyetherpolyole hierfür in Betracht: Polyetherole, basierend auf Ethylenglykol, Glycerin oder Trimethylpropan als Starter sowie Ethlyenoxid und Propylenoxid als Alkylenoxide zur Alkoxylierung der Startsubstanzen mit einem Ethylenoxidendblock oder mit einem statistischen Einbau des Ethylenoxids. Vorzugsweise werden Polyetherole auf Basis von Glycerin mit einem Ethylenoxidendcap eingesetzt, wobei jedoch auch ein Propylenoxidendcap anwendbar ist.

Außerdem sind mehrfunktionelle Polyetherole auf der Basis von Propylenoxid und/oder Butylenoxid und gegebenenfalls Ethylenoxid, wobei der Ethylenoxidgehalt weniger als 30 Gew.-%, vorzugsweise weniger als 25 Gew.-%, beträgt, bevorzugt. Beispielsweise kommen hierfür in Betracht: Polyetherole, basierend auf Propylenglykol, Glycerin, Toluylendiamin und Sorbit und Propylenoxid, wobei eine anteilige Mitverwendung von Ethylenoxid möglich ist. Vorzugsweise werden Polyetheralkohole auf Basis von Propylenoxid mit Glycerin als Starter eingesetzt. Diese Polyole mit einem geringen Ethylenoxidanteil können gegebenenfalls in Mischung mit den oben genannten Polyolen mit einem hohen Ethylenoxidanteil eingesetzt werden. Die genannten Polyetherole können nach bekannten Verfahren hergestellt werden, beispielsweise üblichen Alkoxylierungen allgemein bekannter Startsubstanzen gegebenenfalls in Gegenwart üblicher Katalysatoren.

Geeignete Polyesterpolyalkohole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1:1 bis 1,8, vorzugsweise von 1:1,05 bis 1,2, katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Wie eingangs dargestellt stellt der Flammschutz bei Verbundelementen zur thermischen Isolierung ein besonderes Problem dar. Der Schaum (i) der erfindungsgemäßen Verbundelemente weist im Brandtest nach DIN 4102, Teil 1, B2 eine Flammhöhe von kleiner 15 cm, bevorzugt kleiner 13 cm auf. Dieses hervorragende Verhalten im Brandtest kann erfindungsgemäß bereits durch den Einsatz von 0,5 Gew.-% bis 20 Gew.-%, bevorzugt 3 Gew.-% bis 15 Gew.-%, besonders bevorzugt 5 Gew.-% bis 13 Gew.-% Flammschutzmittel (f), bevorzugt halogenfreies Flammschutzmittel, bezogen auf das Gesamtgewicht der gegenüber Isocyanaten reaktiven Verbindungen (b) und der Flammschutzmittel (f), im Schaum (i) erreicht werden. Dabei sind Verbundelemente besonders bevorzugt, deren Schaum erhältlich ist durch Umsetzung von (a) Isocyanaten mit (b) gegenüber Isocyanaten reaktiven Verbindungen in Gegenwart von Wasser, n-Pentan, Cyclopentan und/oder 2-Methylbutan als Treibmittel (d).

Bevorzugt weist der Schaum (i) eine Erweichungstemperatur von mindestens 160°C, besonders bevorzugt zwischen 170°C und 300°C, insbesondere zwischen 180°C und 260°C auf. Die Erweichungstemperatur wird dabei dadurch bestimmt, dass man eine ca. 5 mm dicke Schaumprobe (älter als 24 h) in Richtung der Zellorientierung mit einem Prüfstempel (∅ 3 mm) und einem Gewicht von 0,5 N belastet. Zu Beginn der Messung in der Mettler TMA 40 (+ TA Controller TC 15) wird die Probe 5 min bei 30°C stabilisiert, um anschließend die Temperatur linear mit 10 K/min anzuheben. Währenddessen wird kontinuierlich der Höhenverlust der Probe aufgezeichnet. Bei 300°C ist das Ende der Messung erreicht. Als Erweichungstemperatur wird die Temperatur angenommen, bei der die Höhe der Probe 90 % der Ursprungsprobenhöhe erreicht hat.

Das erfindungsgemäße Verfahren zur Herstellung von Verbundelementen enthaltend einen Schaum (i) auf der Basis von Polyisocyanat-Polyadditionsprodukten, der Isocyanuratstrukturen aufweist, erhältlich durch Umsetzung von (a) Isocyanaten mit (b) gegenüber Isocyanaten reaktiven Verbindungen und gegebenenfalls (c) Kettenverlängerung- und/oder Vernetzungsmitteln in Gegenwart von (d) Treibmitteln, (e) Katalysatoren, und gegebenenfalls Flammschutzmitteln (f) und/oder Hilfsmitteln (g), zeichnet sich dadurch aus, dass man als (b) mindestens eine Verbindung mit einer Hydroxylzahl von kleiner oder gleich 120 mg KOH/g einsetzt. Bevorzugt wird man als Reaktionsmischung zur Herstellung des Schaumes (i) die folgenden Komponenten verwenden: als (b) mindestens ein Polyether- und/oder Polyesteralkohol mit einer Funktionalität von 2, 3 und/oder 4, als Treibmittel (d) Wasser, n-Pentan, Cyclopentan und/oder 2-Methylbutan, und 0,5 Gew.-% und 20 Gew.-% Flammschutzmittel, bezogen auf das Gesamtgewicht der gegenüber Isocyanaten reaktiven Verbindungen (b) und der Flammschutzmittel (f). Die Kennzahl beträgt üblicherweise zwischen 150 und 800. Die Definition der Kennzahl ist dem Fachmann allgemein geläufig und ist ein Ausdruck für das Verhältnis der Anzahl Isocyanatgruppen zu der Anzahl der gegenüber Isocyanaten reaktiven Gruppen der Komponenten b-g multipliziert mit 100. D.h., dass zur Herstellung der erfindungsgemäßen Schäume die Ausgangskomponenten in solchen Mengen zur Umsetzung gebracht werden, dass das Äquivalenzverhältnis von NCO-Gruppen der Polyisocyanate (a) zur Summe der reaktiven Wasserstoffatome der Komponenten (b) bis (g) 1,5 bis 8,0 ist.

Zu den verwendbaren weiteren Ausgangskomponenten zur Herstellung des Schaumes (i) kann beispielhaft Folgendes ausgeführt werden:

Als Isocyanate, bevorzugt organische Di- und/oder Polyisocyanate (a) zur Herstellung der erfindungsgemäßen Polyurethane kommen die an sich bekannten aliphatischen, cycloaliphatischen araliphfltischen und vorzugsweise aromatischen Isocyanate, bevorzugt Di- und/oder Polyisocyanate in Frage.

Bevorzugt werden aromatische Di- und Polyisocyanate, wie z.B. 2,4- und/oder 2,6-Toluylendiisocyanat und die entsprechenden Isomerengemische, 4,4'-, 2,4'- und/oder 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten eingesetzt. Die organischen Di- und Polyisocyanate können einzeln oder in Form ihrer Mischungen eingesetzt werden.

Bevorzugt verwendet werden Gemische enthaltend die Diphenylmethandiisocyanat-Isomeren, Gemische enthaltend Diphenylmethandiisocyanat und Roh-MDI oder Toluylendiisocyanat mit Diphenylmethandiisocyanat und/oder Roh-MDI. Besonders bevorzugt eingesetzt werden Gemische mit Anteilen an 2,4'-Diphenylmethandiisocyanat von mehr als 30 Gew.-%.

Häufig werden auch allgemein bekannte modifizierte mehrwertige Isocyanate verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate, z.B. allgemeinen bekannte Urethangruppen enthaltende Polyisocyanate mit NCO-Gehalten von 43 bis 3,5 Gew.-%. Bewährt haben sich ferner flüssige, Carbodiimidgruppen und/oder Isocyanuratringe enthaltende Polyisocyanate mit NCO-Gehalten von 43 bis 15, vorzugsweise 31 bis 21 Gew.-%, bezogen auf das Gesamtgewicht, z.B. auf Basis von 4,4'-, 2,4'-und/oder 2,2'-Diphenylmethandiisocyanat und/oder 2,4- und/oder 2,6-Toluylendiisocyanat.

Neben den oben beschriebenen erfindungsgemäß eingesetzten gegenüber Isocyanaten reaktiven Verbindungen (b), die üblicherweise ein Molekulargewicht von 300 g/mol bis 10000 g/mol, bevorzugt 500 g/mol bis 8000 g/mol aufweisen, können gegebenenfalls weitere gegenüber Isocyanaten reaktive Wasserstoffatome aufweisende Verbindungen (b) eingesetzt werden, die im Allgemeinen ein Molekulargewicht von 300 g/mol bis 10000 g/mol, bevorzugt 500 g/mol bis 8000 g/mol aufweisen.

Hierfür kommen vorrangig Verbindungen mit mindestens zwei reaktiven Wasserstoffatomen in Frage. Dabei werden zweckmäßigerweise solche mit einer Funktionalität von 2 bis 8, vorzugsweise 2 bis 4, und einem mittleren Molekulargewicht von 500 bis 8000, vorzugsweise von 1500 bis 7000, verwendet. Die in der Komponente (b) verwendeten Polyetherpolyole können nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 4, reaktive Wasserstoffatome gebunden enthält, oder durch kationische Polymerisation mit Lewisssäuren, wie Antimonpentachlorid, Borfluorid-Etherat u.a., oder Bleicherde als Katalysatoren oder durch Doppelmetallcyanidkatalyse aus einem oder mehreren Alkylenoxiden mit 2 bis 4 Kohlenstoffatomen im Alkylenrest hergestellt werden. Für spezielle Einsatzzwecke können auch monofunktionelle Starter in den Polyetheraufbau eingebunden werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkyl-substituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4', 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit. Die Polyetherpolyole, vorzugsweise Polyoxypropylen- und Polyoxypropylenpolyoxyethylenpolyole besitzen eine Funktionalität von vorzugsweise 2 bis 8 und insbesondere 2 bis 3 und Molekulargewichte von 500 bis 8000, vorzugsweise 1000 bis 7000 und insbesondere 1500 bis 7000 und geeignete Polyoxytetramethylenglykole ein Molekulargewicht bis ungefähr 3500. Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, zweckmäßigerweise in den vorgenannten Polyetherpolyolen hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin. Die Polyetherpolyole können einzeln oder in Form von Mischungen verwendet werden. Neben den beschriebenen Polyetherpolyole können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole verwendet werden.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Schäume (i) können ohne oder unter Mitverwendung von Kettenverlängerungs- und/oder Vernetzungsmitteln (c) hergestellt werden, wobei diese in der Regel aber nicht erforderlich sind. Als Kettenverlängerungs- und/oder Vernetzungsmittel verwendet werden Diole und/oder Triole mit Molekulargewichten kleiner als 500, vorzugsweise 60 bis 499, besonders bevorzugt 60 bis 299. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle. Sofern zur Herstellung der Schäume (i) Kettenverlängerungsmittel, Vernetzungsmittel oder Mischungen davon Anwendung finden, kommen diese zweckmäßigerweise in einer Menge bis zu 10 Gew.-%, bezogen auf das Gewicht der Polyolverbindungen (b), zum Einsatz.

Als Treibmittel (d) können allgemein in der Polyurethanchemie bekannte Treibmittel eingesetzt werden, beispielsweise bekannte chemische und/oder physikalische Treibmittel, z.B. gegebenenfalls halogenierte Kohlenwasserstoffe, Carbamate, Acetale, Wasser, Carbonsäuren, insbesondere Ameisensäure. Bevorzugt wird Wasser, n-Pentan, Cyclopentan und/oder 2-Methylbutan als Treibmittel (d) eingesetzt.

Wasser wird bevorzugt in Anteilen von 0,05 bis 10 Gew.-%, besonders bevorzugt in einer Menge von 0,2 bis 5 Gew.-%, jeweils bezogen auf das Gesamtgewicht der Komponenten (b) bis (g) eingesetzt. Die Menge der neben Wasser gegebenenfalls eingesetzten Treibmittel bzw. Treibmittelmischung liegt bevorzugt bei 1 bis 20 Gew.-%, vorzugsweise 2 bis 15 Gew.-%, jeweils bezogen auf das Gesamtgewicht der Komponenten (b) bis (d).

Als Katalysatoren (e) werden zur Herstellung der Schäume (i) insbesondere Verbindungen verwendet, die die Reaktion der reaktiven Wasserstoffatome, insbesondere hydroxylgruppenenthaltender Verbindungen der Komponenten (b), (c) ,(d) und (f), mit den organischen, gegebenenfalls modifizierten Polyisocyanaten (a) stark beschleunigen. Erfindungsgemäß wird bevorzugt mindestens ein die Polyisocyanuratreaktion unterstützender allgemein bekannter Katalysator (PIR-Katalysator) eingesetzt. Vorzugsweise werden Alkali- und/oder Erdalkalimetallverbindungen, insbesondere Alkalimetallsalze, wie beispielsweise Kaliumacetat, Kaliumoctoat und Kaliumformiat, verwendet. Vorzugsweise eingesetzt wird Kaliumacetat. Weitere erfindungsgemäß zu verwendende Alkali- und/oder Erdalkalimetallverbindungen sind u.a. Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. In Frage kommen auch andere bekannte PIR-Katalysatoren, wie Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid. Neben den PIR-Katalysatoren können weitere in der Polyurethanchemie übliche Katalysatoren mitverwendet werden. Hierfür kommen beispielsweise in Betracht: organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen können allein oder in Kombination mit stark basischen Aminen eingesetzt werden. Genannt seien beispielsweise Amidine, wie 2,3-Dimethyl-3,4,5,6-tetrahydropyrimidin, tertiäre Amine, die wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Bis-(dimethyldiethylaminoethyl)ether, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan, und Aminoalkanolverbindungen, wie Triethanolamin, Triisopropanolamin, N-Methyl- und N-Ethyldiethanolamin und Dimethylethanolamin als Treibkatalysatoren dienen, die neben der Gelreaktion insbesondere die Reaktion des Isocyanates mit dem Wasser favorisieren. Als Gelkatalysator finden Diazabicycloundecan, 1,4-Diazabicyclo-(2,2,2)-octan (Dabco), 1-methylimidazol und vorzugsweise Dimethylcyclohexylamin Verwendung. Diese Katalysatoren beschleunigen die Reaktion des Isocyanates mit den Polyolen. Insgesamt beträgt die Gesamtmenge an Katalysatorkombination, bezogen auf das Gewicht der Aufbaukomponenten (b) bis (g), vorzugsweise weniger als 8 Gew.-%, insbesondere weniger als 5 Gew.-%.

Zur Herstellung der erfindungsgemäßen Schäume (i) können als Flammschutzmittel (f) vorzugsweise halogenfreie Flammschutzmittel eingesetzt werden. Hierfür kommen insbesondere in Frage: Ammoniumpolyphosphat, Aluminiumhydroxid, Isocyanuratderivate und Carbonate von Erdalkalimetallen. Vorzugsweise eingesetzt werden Phosphate, wie z.B. Triethylphosphat, Phosphonate, wie z.B. Diethyl-N.N-di(2-hydroxyethyl)amino-methyl-phosphonat, Melamin, Melaminderivate wie z.B. Melamincyanurat und/oder Gemische aus Melamin und Blähgraphit. Natürlich sind auch erfindungsgemäße Schaumstoffe herstellbar, wenn neben den bevorzugt eingesetzten halogenfreien Flammschutzmitteln weitere in der Polyurethanchemie bekannte halogenhaltige Flammschutzmittel verwendet bzw. mitverwendet werden, wie beispielsweise Trikresylphosphat, Tris-(2-chlorethyl)phosphat, Tris-(2-chlorpropyl)phosphat, Tetrakis-(2-chlorethyl)-ethylendi-phosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch weitere anorganische oder organische Flammschutzmittel, wie roter Phosphor, Aliumiumoxidhydrat, Antimontrioxid, Arsenoxid, Calciumsulfat, Maisstärke und/oder gegebenenfalls aromatische Polyester zum Flammschützen der Polyisocyanatpolyadditionsprodukte verwendet werden.

Wie eingangs dargestellt werden Flammschutzmittel bevorzugt in einer Menge von 0,5 Gew.-% bis 20 Gew.-%, bevorzugt 3 Gew.-% bis 15 Gew.-%, besonders bevorzugt 5 Gew.-% bis 13 Gew.-%, jeweils bezogen auf das Gesamtgewicht der gegenüber Isocyanaten reaktiven Verbindungen (b) und der Flammschutzmittel (f), eingesetzt.

Der Reaktionsmischung zur Herstellung der erfindungsgemäßen, bevorzugt geschlossenzelligen, bevorzugt semiflexiblen Polyurethanschaumstoffe können gegebenenfalls noch weitere Hilfsmittel und/oder Zusatzstoffe (g) einverleibt werden. Genannt seien beispielsweise Stabilisatoren, Füllstoffe, Farbstoffe, Pigmente und Hydrolyseschutzmittel sowie fungistatische und bakteriostatisch wirkende Substanzen.

Die erfindungsgemäßen Schaumstoffe (i) werden vorteilhafterweise nach dem one-shot-Verfahren, beispielsweise mit Hilfe der Hochdruck- oder Niederdruck-Technik hergestellt. Als besonders vorteilhaft hat es sich erwiesen, nach dem Zweikomponentenverfahren zu arbeiten und die Aufbaukomponenten (b) bis (g) zu einer sogenannten Polyolkomponente, oft auch als Komponente A bezeichnet, zu vereinigen und als Isocyanatkomponente, oft auch als Komponente B bezeichnet, die organischen und/oder modifizierten organischen Polyisocyanate (a), beispielsweise ein NCO-Prepolymer oder Mischungen aus diesem Prepolymeren und weiteren Polyisocyanaten, und gegebenenfalls Treibmittel (d) zu verwenden.

Die Ausgangskomponenten werden üblicherweise bei einer Temperatur von 15 bis 80°C, vorzugsweise von 20 bis 60°C und insbesondere von 20 bis 35°C, gemischt und gegebenenfalls unter erhöhtem Druck zur Umsetzung gebracht. Die Vermischung kann mechanisch mittels eines Rührers, mittels einer Rührschnecke oder durch eine Hochdruckvermischung in einer Düse oder Mischkopf durchgeführt werden.

Die erfindungsgemäßen Schäume (i) weisen bevorzugt eine Dichte von 30 bis 100 kg/m³, vorzugsweise von 40 bis 90 kg/m³ und insbesondere von 45 bis 80 kg/m³ auf.

Die Herstellung von gedämmten Rohren ist dem Fachmann allgemein geläufig. Beispielsweise kann die Herstellung derart erfolgen, dass man die Reaktionsmischung zur Herstellung des Schaumes (i) bevorzugt kontinuierlich in eine rohrförmig vorgeformte, gegebenenfalls mehrlagige, bevorzugt diffusionshemmende Folie, die ein Mediumrohr (ii) mit einem zu füllenden Ringspalt umschließt, füllt, den von der Folie umgebenen Schaum (i) bevorzugt kontinuierlich, bevorzugt in einen Ringextruder führt und ein thermoplastisches Material auf die Folie extrudiert.

Da aufgrund des flexiblen Materials ein Aufwickeln der gedämmten Rohre möglich ist, kann auf ein Stückeln der bevorzugt kontinuierlich hergestellten Rohre verzichtet werden. Erstmalig ist es somit möglich, gedämmte Rohre mit einer Länge von mehr als 50 m, bevorzugt mehr als 200 m, insbesondere mehr als 400 m herzustellen.

Das Mediumrohr kann beispielsweise auf folgenden Materialien basieren: Metalle, insbesondere Kupfer, Edelstahl, unlegierter Stahl und Aluminium sowie Kunststoffe, insbesondere vernetztes Polyethylen (PEX). Die Wanddicke des Mediumrohres kann üblicherweise 0,5 mm bis 25 mm betragen. Der Gesamtdurchmesser des Mediumrohres beträgt im allgemeinen 25 bis 1000 mm, bevorzugt 25 bis 400 mm. Der Schaum (i) kann an dem Mediumrohr haften. Alternativ ist es möglich, auf die äußere Oberfläche des Mediumrohres übliche Trennmittel aufzutragen, die eine Haftung des Schaumes (i) an das Mediumrohr verhindern.

Das Mantelrohr (iii) kann beispielsweise auf folgenden Materialien basieren: thermoplastischen Kunststoffen, insbesondere HDPE und LDPE und Metallen, wie z.B. Wickelfalzblechen.

Das Verbundrohr kann nach Durchlaufen des kühlenden Wasserbades auf große Trommeln mit einem Durchmesser größer 1 m, besser größer 1,5 m und am besten größer 2 m aufgewickelt werden. Hierbei entstehen auf der Außenseite hohe Zug- und auf der Innenseite hohe Druckbelastungen, die vom Schaum getragen werden müssen. Daher stellt der hierfür eingesetzte semiflexible Schaum eine Mischform zwischen Weich- und Hartschaum dar. Er weist ausreichend Dehnung auf, um der Zugbelastung standzuhalten und ausreichend Druckfestigkeit, um der Druckbelastung zu widerstehen.

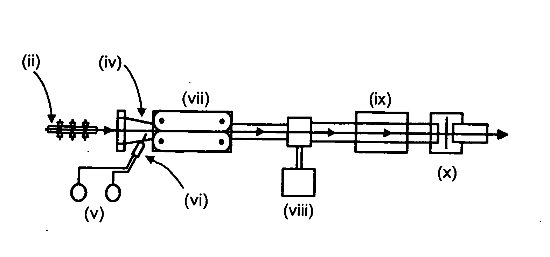

Das Mantelrohr kann aus einer oder mehreren Schicht(en) bestehen, beispielsweise aus der eingangs dargestellten gegebenenfalls diffusionshemmenden, gegebenenfalls mehrlagigen, Folie, beispielsweise der Folie (iv) in Figur 1, und einer weiteren, bevorzugt dickeren Schicht bevorzugt aus thermoplastischem Kunststoff. Die Gesamtdicke der Wand des Mantelrohres inklusive gegebenenfalls der Folie beträgt im Allgemeinen 1 mm bis 25 mm.

In der Figur 1 ist beispielhaft die Herstellung der erfindungsgemäßen gedämmten Rohre schematisch dargestellt. Dabei haben die Abkürzungen die folgende Bedeutung:
- (ii):: Mediumrohr
- (iv):: Folie
- (v):: Dosierapparatur für die Ausgangsstoffe zur Herstellung des Schaumes (i)
- (vi):: Mischkopf
- (vii):: Backenband
- (viii):: Extruder
- (ix):: Wasserbad
- (x):: Säge

Die vorliegende Erfindung soll anhand der angeführten Beispiele erläutert werden, ohne jedoch hierdurch eine entsprechende Eingrenzung vorzunehmen.

### Beispiele

| Beispiel | 1 | 2 | 3 |
|---|---|---|---|
| Polyol A [Gew.-Teilen] | 40 | 40 | 45 |
| Polyol B [Gew.-Teilen] | 40 | 40 | 40 |
| Flammschutzmittel A [Gew.-Teilen] | 10 | - | - |
| Flammschutzmittel B [Gew.-Teilen] | - | 10 | - |
| Flammschutzmittel C [Gew.-Teilen] | - | - | 5 |
| Tegostab® B 8467 [Gew.-Teilen] | 1,5 | 1,5 | 1,5 |
| DMCHA [Gew.-Teilen] | 2 | 2 | 2 |
| Kaliumacetat* [Gew.-Teilen] | 2 | 2 | 2 |
| Wasser [Gew.-Teilen] | 2,4 | 1,5 | 2,4 |
| Pentan [Gew.-Teilen] | - | 6,5 | - |
| Lupranat® M 20S [Gew.-Teilen] | 233 | 188 | 202 |
| Isocyanat-Index | 400 | 400 | 400 |
| Flammenhöhe** | 9 | 10 | 12 |
| Erweichungstemperatur | 210°C | 200°C | 211°C |
| * Trimerisationskatalysator (PIR) | | | |
| ** nach DIN 4102, Teil 1, B2 gilt eine Flammhöhe unter 15 cm als bestanden | | | |

- Tegostab® B 8467:: Fa. Goldschmidt, Essen
- Lupranat® M 20S:: BASF Aktiengesellschaft

| | OH-Zahl | Funktionalität | Halogengehalt | Molekulargewicht |
|---|---|---|---|---|
| Polyol A | 28 mg KOH/g | 2,7 | - | 6000 |
| Polyol B | 55 mg KOH/g | 2,7 | - | 3100 |
| Flammschutzmittel A | 330 mg KOH/g | 3 | halogenhaltig | - |
| Flammschutzmittel B | 0 mg KOH/g | 0 | halogenhaltig | - |
| Flammschutzmittel C | 0 mg KOH/g | 0 | halogenfrei | - |

- Polyol A:: Polyetheralkohol auf der Basis von Glycerin, Propylenoxid/Ethylenoxid
- Polyol B:: Polyetheralkohol auf der Basis von Glycerin, Propylenoxid/Ethylenoxid

## Patentansprüche

1. Verbundelemente enthaltend einen Schaum (i) auf der Basis von Polyisocyanat-Polyadditionsprodukten, der Isocyanuratstrukturen aufweist und auf der Umsetzung von (a) Isocyanaten mit (b) gegenüber Isocyanaten reaktiven Verbindungen basiert, **dadurch gekennzeichnet, dass** als (b) mindestens eine Verbindung mit einer Hydroxylzahl von kleiner oder gleich 120 mg KOH/g vorliegt.

2. Verbundelemente gemäß Anspruch 1, **dadurch gekennzeichnet, dass** es sich bei den Verbundelementen um gedämmte Rohre handelt enthaltend mindestens ein Mediumrohr (ii), das von dem Schaum (i) umgeben ist, der gegebenenfalls von einem Mantelrohr (iii) umschlossen wird.

3. Verbundelemente gemäß Anspruch 1, **dadurch gekennzeichnet, dass** als (b) mindestens ein Polyether- und/oder Polyesteralkohol mit 2, 3 und/oder 4 Hydroxylgruppen vorliegt.

4. Verbundelemente gemäß Anspruch 1, **dadurch gekennzeichnet, dass** die Hydroxylzahl der Mischung der als (b) gegenüber Isocyanaten reaktiven Verbindungen eingesetzten Polyether-und/oder Polyesteralkohole kleiner 200 mgKOH/g beträgt.

5. Verbundelemente gemäß Anspruch 1, **dadurch gekennzeichnet, dass** der Schaum (i) im Brandtest nach DIN 4102, Teil 1, B2 eine Flammhöhe von kleiner 15 cm aufweist.

6. Verbundelemente gemäß Anspruch 1, **dadurch gekennzeichnet, dass** der Schaum zwischen 0,5 Gew.-% und 20 Gew.-% Flammschutzmittel (f), bezogen auf das Gesamtgewicht der gegenüber Isocyanaten reaktiven Verbindungen (b) und der Flammschutzmittel (f), enthält.

7. Verbundelement gemäß Anspruch 1, **dadurch gekennzeichnet, dass** der Schaum erhältlich ist durch Umsetzung von (a) Isocyanaten mit (b) gegenüber Isocyanaten reaktiven Verbindungen in Gegenwart von Wasser, n-Pentan, Cyclopentan und/oder 2-Methylbutan als Treibmittel (d).

8. Verfahren zur Herstellung von Verbundelementen enthaltend einen Schaum (i) auf der Basis von Polyisocyanat-Polyadditionsprodukten, der Isocyanuratstrukturen aufweist, erhältlich durch Umsetzung von (a) Isocyananten mit (b) gegenüber Isocyanaten reaktiven Verbindungen und gegebenenfalls (c) Kettenverlängerung- und/oder Vernetzungsmitteln in Gegenwart von (d) Treibmitteln, (e) Katalysatoren, und gegebenenfalls Flammschutzmitteln (f) und/oder Hilfsmitteln (g), **dadurch gekennzeichnet, dass** man als (b) mindestens eine Verbindung mit einer Hydroxylzahl von kleiner 120 mg KOH/g einsetzt.

9. Verfahren gemäß Anspruch 8, **dadurch gekennzeichnet, dass** man als (b) mindestens ein Polyether- und/oder Polyesteralkohol mit 2, 3 und/oder 4 Hydroxylgruppen einsetzt, als Treibmittel (d) Wasser, n-Pentan, Cyclopentan und/oder 2-Methylbutan, und 0,5 Gew.-% und 20 Gew.-% Flammschutzmittel, bezogen auf das Gesamtgewicht der gegenüber Isocyanaten reaktiven Verbindungen (b) und der Flammschutzmittel (f) einsetzt und die Umsetzung bei einer Kennzahl zwischen 150 und 800 durchführt.

10. Verfahren gemäß Anspruch 8 oder 9 zur Herstellung von gedämmten Rohren, **dadurch gekennzeichnet, dass** man die Reaktionsmischung zur Herstellung des Schaumes (i) in eine rohrförmig vorgeformte Folie, die ein Mediumrohr (ii) mit einem zu füllenden Ringspalt umschließt, füllt, den von der Folie umgebenen Schaum (i) gegebenenfalls in einen Ringextruder führt und ein thermoplastisches Material auf die Folie extrudiert.

## Claims

1. A composite element comprising a foam (i) based on polyisocyanate polyaddition products and having isocyanurate structures, and based on the reaction of (a) isocyanates with (b) compounds reactive toward isocyanates, wherein at least one compound having a hydroxy value smaller than or equal to 120 mg KOH/g is present as (b).

2. The composite element according to claim 1, which is an insulated pipe comprising at least one conveying pipe (ii), surrounded by the foam (i), which, if appropriate, is enclosed by a jacketing pipe (iii).

3. The composite element according to claim 1, wherein at least one polyether alcohol and/or polyester alcohol having 2, 3 and/or 4 hydroxy groups is present as (b).

4. The composite element according to claim 1, wherein the hydroxy value of the mixture of the polyether alcohols and/or polyester alcohols used as (b) compounds reactive toward isocyanates is smaller than 200 mg KOH/g.

5. The composite element according to claim 1, wherein the foam (i) has a flame height smaller than 15 cm in the DIN 4102, Part 1, B2 fire test.

6. The composite element according to claim 1, wherein the foam comprises from 0.5 to 20% by weight of flame retardants (f), based on the total weight of the compounds (b) reactive toward isocyanates and of the flame retardants (f).

7. The composite element according to claim 1, wherein the foam is obtainable by reacting (a) isocyanates with (b) compounds reactive toward isocyanates in the presence of water, n-pentane, cyclopentane, and/or 2-methylbutane as blowing agent (d).

8. A process for producing composite elements comprising a foam (i) based on polyisocyanate polyaddition products and having isocyanurate structures, obtainable by reacting (a) isocyanates with (b) compounds reactive toward isocyanates, and, where appropriate, (c) chain extenders and/or crosslinking agents, in the presence of (d) blowing agents, (e) catalysts, and, where appropriate, flame retardants (f), and/or auxiliaries (g) which comprises using at least one compound having a hydroxy value smaller than 120 mg KOH/g as (b).

9. The process according to claim 8, wherein at least one polyether alcohol and/or polyester alcohol having 2, 3, and/or 4 hydroxy groups is used as (b), water, n-pentane, cyclopentane and/or 2-methylbutane is used as blowing agent (d), and from 0.5 to 20% by weight of flame retardants are used, based on the total weight of the compounds (b) reactive toward isocyanates and of the flame retardants (f), and the reaction takes place with an index of from 150 to 800.

10. The process according to claim 8 or 9 for producing insulated pipes, wherein the reaction mixture for producing the foam (i) is charged to a pre-formed foil in the shape of a pipe and enclosing a conveying pipe (ii) with an annular gap to receive material, the foam (i) surrounded by the foil is, if appropriate, passed to a ring extruder, and a thermoplastic material is extruded onto the foil.

## Revendications

1. Eléments composites contenant une mousse (i) à base de produits de polyaddition de polyisocyanate, qui présente des structures isocyanurate et qui est basée sur la réaction (a) d'isocyanates avec (b) des composés réactifs vis-à-vis des isocyanates, **caractérisés en ce que**, comme (b), au moins un composé présentant un indice d'hydroxyle inférieur ou égal à 120 mg de KOH/g est présent.

2. Eléments composites suivant la revendication 1, **caractérisés en ce que**, en ce qui concerne les éléments composites, il s'agit de tuyaux isolés comportant au moins un tube de milieu (ii) qui est entouré par la mousse (i) qui est éventuellement enveloppée par un tube d'enveloppe (iii).

3. Eléments composites suivant la revendication 1, **caractérisés en ce que**, comme (b), il y a au moins un polyétheralcool et/ou polyesteralcool comportant 2, 3 et/ou 4 groupes hydroxyle.

4. Eléments composites suivant la revendication 1, **caractérisés en ce que** l'indice d'hydroxyle du mélange des polyétheralcools et/ou polyesteralcools mis en oeuvre comme composés (b) réactifs vis-à-vis des isocyanates est inférieur à 200 mg de KOH/g.

5. Eléments composites suivant la revendication 1, **caractérisés en ce que** la mousse (i) présente dans l'essai au feu selon la norme DIN 4102, partie 1, B2 une hauteur de flamme inférieure à 15 cm.

6. Eléments composites suivant la revendication 1, **caractérisés en ce que** la mousse contient entre 0,5 % en poids et 20 % en poids d'agent ignifuge (f), par rapport au poids total des composés (b) réactifs vis-à-vis des isocyanates et de l'agent ignifuge (f).

7. Eléments composites suivant la revendication 1, **caractérisés en ce que** la mousse peut être obtenue par réaction (a) d'isocyanates avec (b) des composés réactifs vis-à-vis des isocyanates en présence d'eau, de n-pentane, de cyclopentane et/ou de 2-méthylbutane, comme agent moussant (d).

8. Procédé de préparation d'éléments composites contenant une mousse (i) à base de produits de polyaddition de polyisocyanate, qui présente des structures isocyanurate, pouvant être obtenue par réaction (a) d'isocyanates avec (b) des composés réactifs vis-à-vis des isocyanates et éventuellement (c) d'agents d'allongement de chaîne et/ou d'agents de réticulation, en présence (d) d'agents moussants, (e) de catalyseurs et éventuellement d'agents ignifuges (f) et/ou d'agents auxiliaires (g), **caractérisé en ce que**, comme (b), on met en oeuvre au moins un composé présentant un indice d'hydroxyle inférieur à 120 mg de KOH/g.

9. Procédé suivant la revendication 8, **caractérisé en ce que**, 1 on met en oeuvre, comme (b), au moins un polyétheralcool et/ou polyesteralcool comportant 2, 3 et/ou 4 groupes hydroxyle, comme agent moussant (d), de l'eau, du n-pentane, du cyclopentane et/ou du 2-méthylbutane, et entre 0,5 % en poids et 20 % en poids d'agent ignifuge, par rapport au poids total des composés réactifs vis-à-vis des isocyanates (b) et de l'agent ignifuge (f), et **en ce qu'**on effectue la réaction à un indice caractéristique compris entre 150 et 800.

10. Procédé suivant la revendication 8 ou 9, pour la préparation de tuyaux isolés, **caractérisé en ce qu'**on charge le mélange réactionnel destiné à la préparation de la mousse (i) dans une feuille préformée sous forme tubulaire qui entoure un tube de milieu (ii) avec un intervalle annulaire à remplir, **en ce qu'**on guide la mousse (i) entourée par la feuille éventuellement dans une extrudeuse annulaire et **en ce qu'**on extrude une matière thermoplastique sur la feuille.
